Europäisches Patentamt

**European Patent Office** (11) Publication number: **0 255 197**

Office européen des brevets A2

(12) **EUROPEAN PATENT APPLICATION**

(21) Application number: 87302440.0

(22) Date of filing: 20.03.87

(51) Int. Cl.⁴: **G01N 25/22 , G01N 25/32**

(30) Priority: 28.07.86 US 891075

(43) Date of publication of application:
**03.02.88 Bulletin 88/05**

(84) Designated Contracting States:
**DE ES FR GB IT**

(71) Applicant: **THE BABCOCK & WILCOX COMPANY**
**1010 Common Street P.O. Box 60035**
**New Orleans Louisiana 70160(US)**

(72) Inventor: **Cooper, Marshall Hilton**
**33750 Arthur Road**
**Solon Ohio 44139(US)**

(74) Representative: **Cotter, Ivan John et al**
**D. YOUNG & CO. 10 Staple Inn**
**London WC1V 7RD(GB)**

(54) Measuring/detecting free oxygen in combustible/hazardous atmospheres.

㉗ A detector for measuring free oxygen at ambient temperature in a combustible atmosphere (14) which may be hazardous comprises a differential thermocouple pair (24) having a first thermocouple junction coated with a catalyst and a second thermocouple junction coated with a non-catalyst. Free oxygen in the combustible atmosphere reacts with the catalyst to liberate heat and thereby raise the temperature of the catalyst coated junction above that of the non-catalyst coated junction. Thus, the increase in temperature of the first thermocouple above that of the second thermocouple is indicative of the free oxygen in the combustible atmosphere.

FIG. 1

EP 0 255 197 A2

## MEASURING/DETECTING FREE OXYGEN IN COMBUSTIBLE/HAZARDOUS ATMOSPHERES

This invention relates to measuring and/or detecting free oxygen in combustible and/or hazardous atmospheres.

Oxygen detectors are known which utilise an oxygen ion conductive solid electrolyte, such as zirconium oxide, to sense oxygen content in process gases and combustion flue gases. A system utilising such a sensor is illustrated in US Patent No. US-A-3 960 500 (Ross et al). Such sensors require elevation of the sensor temperature to its active zone in order to provide a signal indicative of the oxygen content in the gas sample. The required sensor operating temperature may be in excess of 816°C (500°F). Obviously, this type of sensor is unsuitable for detecting free oxygen in a combustible atmosphere since its operating temperature would be in excess of the auto-ignition temperature of the combustible atmosphere. In addition, the high operating temperature of such sensors could cause the free oxygen to react with the combustible atmosphere prior to actually being detected, thereby resulting in a lower, false indication of free oxygen in the combustible atmosphere. This false indication may result in potentially dangerous levels of free oxygen in the combustible atmosphere going undetected.

As exemplified by US Patent No. US-A-4 063 898 (Fisher), differential thermocouple detectors have been used to monitor combustible gases in an airstream. Such detectors include a differential thermocouple pair with one junction coated with a catalyst and the other junction with a non-catalyst. Combustible gases are heated above the existing ambient temperature of the atmosphere to react with the catalyst to liberate heat to the catalyst-coated thermocouple junction thereby raising the temperature of the catalyst-coated junction above that of the non-catalyst coated junction in proportion to the concentration of combustible gases. The output signal from such a device is thus indicative of the concentration of combustible gases in the airstream. However, the present inventor is unaware of any prior art combustibles detectors using such differential thermocouples being adapted to measure free oxygen in a combustible atmosphere at the existing ambient temperature of the atmosphere.

According to a first aspect of the present invention there is provided a detector for measuring free oxygen in a combustible atmosphere at the existing ambient temperature of the atmosphere, the detector comprising measuring means for measuring free oxygen at existing ambient temperatures without any external heat application.

According to a second aspect of the present invention there is provided a detector for measuring free oxygen in a hazardous atmosphere in an inherently safe manner, the detector comprising measuring means for measuring free oxygen in a hazardous atmosphere at the existing temperature of the hazardous atmosphere.

According to a third aspect of the present invention there is provided an analyser for detecting free oxygen in a combustible atmosphere, the analyser comprising:

a first thermocouple junction formed from dissimilar metals;

a second thermocouple junction formed from the same dissimilar metals as the first thermocouple junction and being electrically connected to the first thermocouple junction to oppose the electrical output signal of the first thermocouple junction;

a catalytic coating on the first thermocouple junction to react with free oxygen in the combustible atmosphere to liberate heat and thereby increase the temperature of the first thermocouple junction;

a non-catalytic coating on the second thermocouple junction to prevent free oxygen in the combustible atmosphere from reacting with the second thermocouple junction to liberate heat; and

means connected to the first and second thermocouple junctions for detecting the temperature differential between the first thermocouple junction above that of the second thermocouple junction, the temperature differential being proportional to the free oxygen in the combustible atmosphere.

A preferred embodiment of the present invention described in detail hereinbelow provides a detector that will monitor free oxygen in a combustible atmosphere while at the same time being capable of eliminating the prior art problem of high sensor operating temperatures that may be in excess of the auto-ignition temperature of the combustible atmosphere or result in a false indication of the free oxygen level in the combustible atmosphere. The preferred embodiment provides a differential thermocouple device for measuring free oxygen in a combustible atmosphere which operates at a temperature below the auto-ignition temperature of the combustible atmosphere. A first thermocouple junction of a thermocouple pair is coated with a catalytic material to allow free oxygen in a combustible atmosphere to react with the catalyst to liberate heat and thereby raise the temperature of the catalyst coated thermocouple junction. The second thermocouple junction of the thermocouple pair is coated with a non-catalytic material to prevent free oxygen in the combustible atmosphere from reacting with the second thermocouple junction to liberate heat. Thus, the increase in temperature of the first thermocouple above that of the second thermocouple is proportional to the free oxygen in the combustible atmosphere.

Accordingly to various further aspects thereof, the present invention provides:

a detector for measuring free oxygen in a combustible atmosphere that is operable without any external heat application;

a detector for measuring free oxygen in a hazardous atmosphere that is inherently safe; and

an analyser for detecting free oxygen in a combustible atmosphere which utilises a differential thermocouple.

The invention will now be further described, by way of illustrative and non-limiting example, with reference to the accompanying drawings, in which:

Figure 1 is a schematic illustration of a sampling analysing assembly incorporating an oxygen detector embodying the present invention;

Figure 2a and 2b are graphical illustrations of the sensor output (millivolts) versus oxygen concentration characteristic of a differential thermocouple sensor of the assembly of Figure 1; and

Figure 3 is a side view of the differential thermocouple sensor.

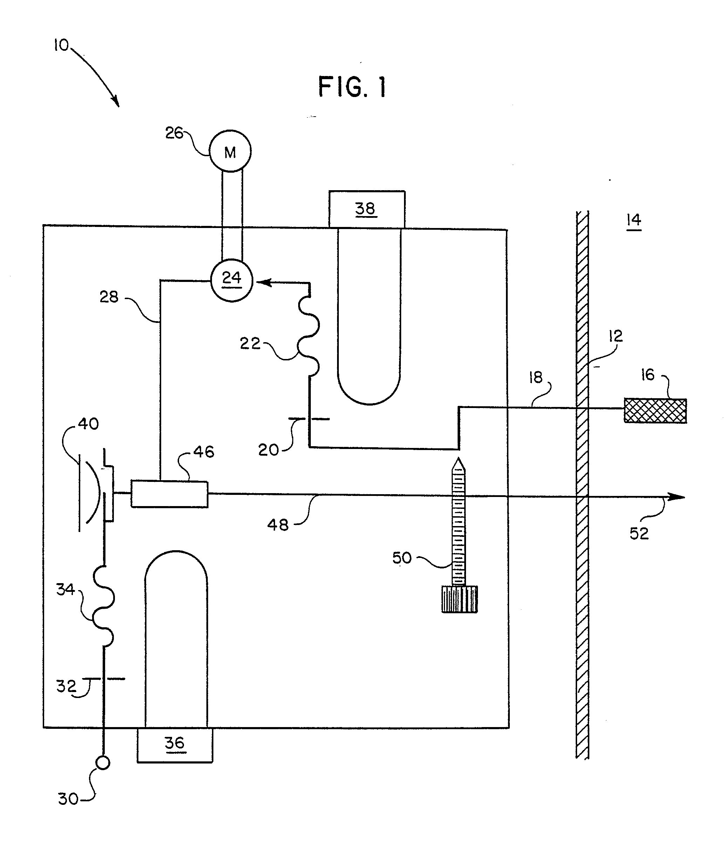

Figure 1 shows a sampling analysing assembly 10 that is connected to an annealing furnace wall 12 to draw a sample of a combustible atmosphere 14 from inside the annealing furnace for analysis and exhaust it back into the same furnace through an exhaust line 48 to prevent condensation at an exhaust outlet 52. The sampling analysing assembly 10 may be similar to the system described in US Patent No. US-A-3 960 500 (cited above) which provides for recirculation of flue gases from a duct and back thereto. Further details of such a sampling analysing system are available in US-A-3 960 500 and the reader is referred thereto for any further required clarification.

A sample of the combustible atmosphere 14 is drawn into the sampling analysing assembly 10 through a sample probe 16 which extends into the annealing furnace. The probe 16 may be similar to that described in US Patent No. US-A-4 286 472 and serves to prevent dust and soot particles from being entrained by the probe 16 and therefrom into the sampling analysing assembly 10. Further details of such a probe are described in US-A-4 286 472 and the reader is referred thereto for any further required clarification.

The sample of the combustible atmosphere 14 is drawn into the sampling analysing assembly 10 through the probe 16 by the action of an aspirator assembly 46. The aspirator assembly 46 is powered by aspirating gas provided by an aspirating gas supply 30 which, in a preferred arrangement, is a tank of pressurised nitrogen gas, although other gases, mixtures thereof, or shop air may be substituted depending on the composition of the combustible atmosphere 14 and whether the sample of the combustible atmosphere 14 is exhausted back into the annealing furnace or to the atmosphere. A conventional pressure regulator (not shown) is connected to the aspirating gas supply 30 in order to maintain the outlet pressure of the aspirating gas at approximately 103 kPa (15 lbf/in²).

The aspirating gas supply 30 is connected to an aspirating gas orifice 32 which is sized with respect to the outlet pressure of the aspirating gas supply 30 and the action of the aspirator assembly 46 to provide a total sampling rate of the combustible atmosphere 14 of between 1425 and 2375 cm³/minute with 1900 cm³/minute being a preferred sampling rate.

The aspirating gas orifice 32 is connected to the aspirator assembly 46 by a connecting line 34 which is formed within the sampling analysing assembly 10 as a series of sinusoidal paths. The connecting line 34 is made sinusoidal to provide a longer contact time with the aspirating gas in order to pre-condition the aspirating gas before it contacts the aspirator assembly 46. A resistance heater/thermostat assembly 36 is located adjacent to the connecting line 34 and is thermostatically controlled to maintain the temperature of the aspirating gas above the dewpoint of the combustible atmosphere 14, thereby preventing condensation from occuring with the drawn sample of the combustible atmosphere 14 when the two are mixed in the aspirator assembly 46.

A temperature-actuated flow control device 40 is connected between the aspirator assembly 46 and the connecting line 34. The flow control device 40 may be similar to that described in US Patent No. US-A-4 557 419 (Hall) and serves to permit continuous sampling of the combustible atmosphere 14 above the dewpoint of the combustible atmosphere 14 and to stop sampling of the combustible atmosphere 14 by the sampling analysing system 10 whenever the temperature of the aspirating gas falls below the dewpoint of the combustible atmosphere 14. Further details of such a temperature-actuated flow control device are described in US-A-4 557 419 and the reader is referred thereto for any further required clarification.

The probe 16 is connected via a sample inlet line 18 to a sample orifice 20 which also is sized with respect to the outlet pressure of the aspirating or main gas supply 30 and the action of the aspirator assembly 46 to provide a total sampling rate of the combustible atmosphere 14 of between 1425 and 2375 cm³/minute with 1900 cm³/minute being a preferred sampling rate.

The sample orifice 20 is connected to a connecting line 22 which is formed within the sampling analysing assembly 10 as a series of sinusoidal paths in the same manner as the connecting line 34, discussed above, in order to pre-condition the gas sample before it contacts a sensor assembly 24 and the aspirator assembly 46. A resistance heater/thermostat assembly 38 is located adjacent to the connecting line 22 and is thermostatically controlled to maintain the temperature of the sample of the combustible atmosphere 14 above its dewpoint thereby preventing condensation from occuring within the connecting line 22 or the sensor assembly 24. The assembly 38 may, for example, be operative to maintain the temperature of the sample at approximately 260°C (500°F).

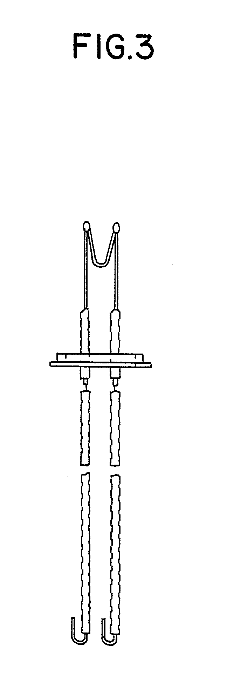

The connecting line 22 is connected to the sensor assembly 24. The sensor assembly 24 serves to permit continuous analysis of the combustible atmosphere 14. The sensor assembly 24 may include a differential thermocouple detector similar to that described in US Patent No. US-A-4 063 989 (cited above) and as shown in Figure 3. The detector includes a differential thermocouple pair with one junction being formed from dissimilar metals and coated with a catalyst and the other junction being formed from the same dissimilar metals, being coated with a non-catalyst, and being electrically connected to the first junction to oppose the electrical output signal of the first junction. Further details of such a detector are described in US-A-4 063 898 and the reader is referred thereto for any further required clarification.

The sample of the combustible atmosphere 14 reacts with the catalyst to liberate heat to the catalyst-coated thermocouple junction, thereby raising the temperature of the catalyst-coated junction above that of the non-catalyst coated junction in proportion to the concentration of free oxygen in the combustible atmosphere 14. A voltmeter 26 is connected to the sensor assembly 24 to provide a display of the output of the sensor assembly 24.

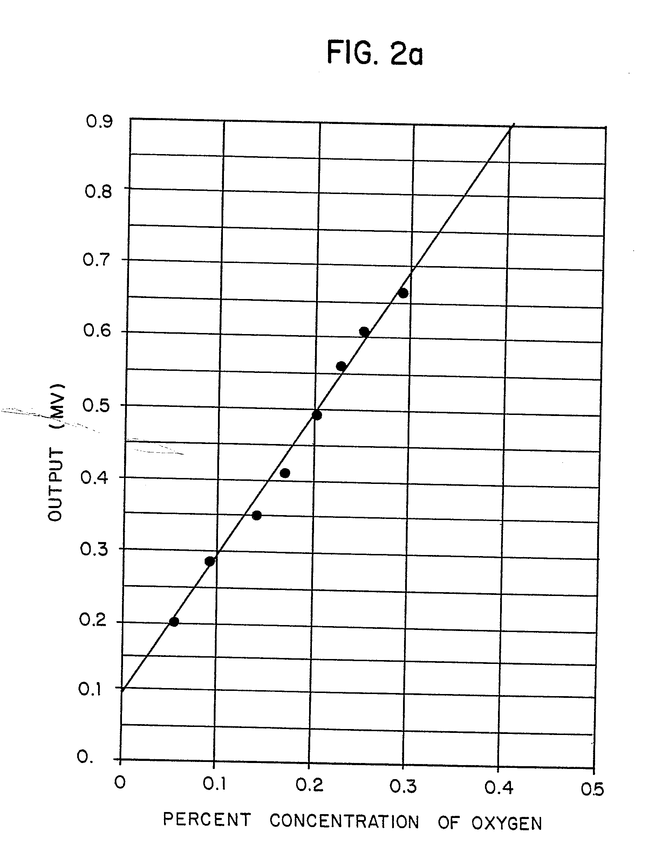

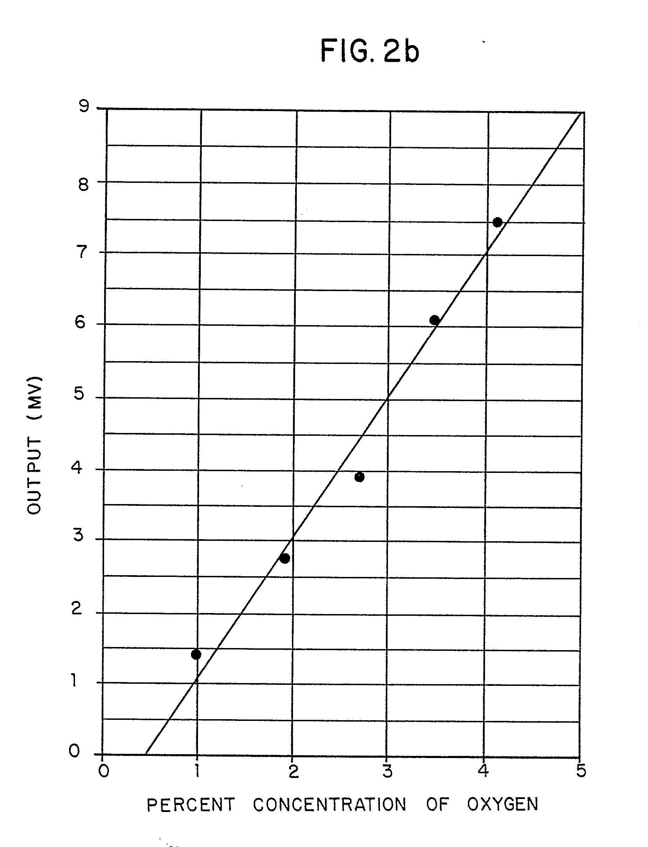

Referring to Figures 2a and 2b, it may be seen that varying concentrations of free oxygen will produce a corresponding variable millivolt output at the voltmeter 26 as a result of the heat liberated to the catalytic-coated thermocouple junction depending on the concentration of free oxygen in the combustible atmosphere 14. The output signal from the sensor assembly 24 is thus indicative of the concentration of free oxygen in the combustible atmosphere 14. The voltmeter 26 may be calibrated according to the chart disclosed in Figures 2a and 2b to provide a direct readout of the concentration of free oxygen in the sample of the combustible atmosphere 14 passing through the sensor assembly 14.

An outlet line 28 is connected between the sensor assembly 24 and the aspirator assembly 46 to receive the sample of combustible atmosphere 14 from the sensor assembly 24. The sample is then exhaused through the exhaust line 48 and out at the exhaust outlet 52 either back into the same furnace or to the atmosphere.

A shut-off valve 50 located in line with the sample inlet line 18 allows manual closing of the sample inlet line 18, thereby isolating the sampling analysing assembly 10 to permit routine calibration and maintenance of the sampling analysing assembly 10.

The detector shown in Figure 3 may include an additional catalyst coated thermocouple junction and an additional non-catalyst coated thermocouple junction connected in series thereby doubling the sensitivity of the detector to free oxygen.

## Claims

1. A detector for measuring free oxygen in a combustible atmosphere (14) at the existing ambient temperature of the atmosphere, the detector comprising measuring means for measuring free oxygen at existing ambient temperatures without any external heat application.

2. A detector according to claim 1, wherein the measuring means comprises a thermocouple junction located in the combustible atmosphere (14) and catalytic means formed around the thermocouple junction to allow free oxygen in the combustible atmosphere to react with the catalytic means to liberate heat and thereby increase the temperature of the thermocouple junction, the increase in temperature being proportional to the free oxygen in the combustible atmosphere.

3. A detector according to claim 2, including a second thermocouple junction located in the combustible atmosphere and means for preventing free oxygen in the combustible atmosphere from reacting with the second thermocouple junction to liberate heat.

4. A detector according to claim 3, wherein said means for preventing free oxygen in the combustible atmosphere from reacting with the second thermocouple junction to liberate heat is formed around the second thermocouple junction.

5. A detector according to claim 3 or claim 4, wherein said means for preventing free oxygen in the combustible atmosphere from reacting with the second thermocouple junction to liberate heat is a non-catalytic coating.

6. A detector for measuring free oxygen in a hazardous atmosphere in an inherently safe manner, the detector comprising measuring means for measuring free oxygen in a hazardous atmosphere (14) at the existing temperature of the hazardous atmosphere.

7. A detector according to claim 6, wherein the measuring means includes a first thermocouple junction located in the hazardous atmosphere, a second thermocouple junction located in the hazardous atmosphere, and catalytic means formed around the first thermocouple junction to allow free oxygen in the hazardous atmosphere to react with the catalytic means to liberate heat and thereby create a temperature differential between the first thermocouple junction above that of the second thermocouple junction, the temperature differential being proportional to the free oxygen in the hazardous atmosphere.

8. A detector according to claim 7, wherein the first thermocouple junction is connected to the second thermocouple junction to form a differential thermocouple (24).

9. A detector according to claim 7 or claim 8, including means (26) connected to the first and second thermocouple junctions for indicating the temperature differential between the first and second thermocouple junctions.

10. A detector according to claim 9, wherein the means (26) connected to the first and second thermocouple junctions for indicating the temperature differential between the first and second thermocouple junctions is a millivolt meter.

11. An analyser for detecting free oxygen in a combustible atmosphere (14), the analyser comprising:

a first thermocouple junction formed from dissimilar metals; –

a second thermocouple junction formed from the same dissimilar metals as the first thermocouple junction and being electrically connected to the first thermocouple junction to oppose the electrical output signal of the first thermocouple junction;

a catalytic coating on the first thermocouple junction to react with free oxygen in the combustible atmosphere to liberate heat and thereby increase the temperature of the first thermocouple junction;

a non-catalytic coating on the second thermocouple junction to prevent free oxygen in the combustible atmosphere from reacting with the second thermocouple junction to liberate heat; and

means (26) connected to the first and second thermocouple junctions (24) for detecting the temperature differential between the first thermocouple junction above that of the second thermocouple junction, the temperature differential being proportional to the free oxygen in the combustible atmosphere.

12. An analyser according to claim 11, including heater means (38) for maintaining the temperature of the combustible atmosphere above the dewpoint of the combustible atmosphere to prevent condensation from occuring in the analyser.

13. An analyser according to claim 12, wherein the heater means is operative to maintain the temperature of the combustible atmosphere at approximately 260°C (500°F) to prevent condensation from occuring in the analyser.

# FIG. 1

# FIG. 2a

PERCENT CONCENTRATION OF OXYGEN

# FIG. 2b

PERCENT CONCENTRATION OF OXYGEN

# FIG.3